# FASCICULE DE BREVET EUROPEEN

(11) **EP 0 893 291 B1**
(45) Date de publication et mention de la délivrance du brevet: **13.03.2002**
(21) Numéro de dépôt: 98401458.9
(22) Date de dépôt: 15.06.1998
(51) Int. Cl.: B60G 21/055, F16F 1/38, F16F 1/16

(54) **Palier élastique pour maintenir la barre de torsion d'un dispositif anti-dévers**
Elastische Lagerstütze für einen Torsionsstab einer Stabilisationseinrichtung
Elastic bearing support for a anti-roll torsion bar

(30) Priorité: 21.07.1997 FR 9709222
(43) Date de publication de la demande: 27.01.1999
(73) Titulaire: MICHELIN AVS, 78000 Versailles (FR)
(72) Inventeur: de Fontenay, Etienne, 58300 Decize (FR)
(74) Mandataire: Peuscet, Jacques

(56) Documents cités:
- EP-A- 0 381 566
- DE-A- 3 909 052
- DE-C- 4 413 666
- DE-U- 8 901 526
- FR-A- 2 643 314
- GB-A- 1 516 572
- US-A- 3 888 472

## Description

La présente invention concerne d'une manière générale les dispositifs usuellement appelés anti-dévers ou anti-roulis mis en oeuvre sur les véhicules, véhicules automobiles ou wagons de chemin de fer, pour maintenir leur assiette dans les virages. Ces dispositifs comportent une barre de torsion dont chaque extrémité est reliée à une roue de l'essieu le long duquel est montée la barre de torsion, des paliers élastiques assurant le maintien de ladite barre de torsion sur la caisse du véhicule.

La présente invention concerne plus précisément les paliers élastiques mis en oeuvre pour le montage de la barre de torsion anti-dévers d'un véhicule automobile, du type de ceux décrits dans le FR 2 643 314. Le problème, qui se pose lors de la conception de ces paliers élastiques, tient au fait qu'ils doivent être tels qu'il n'y ait pas de mouvement relatif entre la barre et le caoutchouc du palier qui la porte.

Si le caoutchouc formant le palier est souple, c'est-à-dire s'il a une dureté Shore inférieure à 55, la raideur en torsion est faible tandis que le coefficient de frottement est important. Un tel palier présente de bonnes caractéristiques en ce qui concerne les mouvements relatifs de la barre par rapport au caoutchouc, mais il est sujet à une usure par frottement beaucoup trop importante.

Lorsque le caoutchouc utilisé est dur, l'usure se produisant en fonctionnement est réduite mais il se produit des glissements relatifs entre la barre et le caoutchouc, ce qui génère des hystérésis pour la réponse du dispositif à une sollicitation. On choisit usuellement un caoutchouc dur et l'on donne au palier une conformation permettant de réduire les mouvements relatifs entre la barre et le caoutchouc.

Lorsque l'on met en oeuvre un simple cylindre de caoutchouc disposé autour de la barre de torsion et que l'on comprime le caoutchouc autour de ladite barre, on constate que le caoutchouc flue ce qui réduit la pression de contact ; la rigidité radiale est également réduite : les performances de la barre anti-dévers sont détériorées. C'est pourquoi on a déjà utilisé une armature intermédiaire disposée dans le caoutchouc de manière à pouvoir serrer la bague de caoutchouc sur la barre sans fluage important.

De nombreuses propositions ont été faites pour fournir des paliers permettant de résoudre ces différents problèmes mais aucune n'est totalement satisfaisante.

Il a, par exemple, été proposé d'adhériser le caoutchouc sur la barre de torsion par vulcanisation, cette solution fournit un palier présentant de bonnes caractéristiques mais d'un coût élevé.

Une autre solution consiste à prévoir une coopération barre de torsion/caoutchouc de palier suivant une section non circulaire ; mais l'on constate qu'un tel procédé réduit la tenue en fatigue de la barre.

On connaît d'après DE 39 09 052 A1 un palier comportant deux demi coquilles extérieures de montage définissant une cavité circulaire et un élément de palier métal-caoutchouc apte à être serré autour d'un arbre stabilisateur de véhicule à l'intérieur de la cavité entre les demi coquilles.

On connaît d'après US 3 888 472 A un insert de suspension pour palier élastique dont la dureté Shore A est comprise entre environ 35 et 70.

La présente invention a pour but de proposer un palier élastique présentant de bonnes caractéristiques, qui soit résistant et bon marché, et qui soit tel qu'il n'y ait pas de mouvement relatif entre la barre et le caoutchouc du palier qui la porte, en ne prévoyant pas d'opération d'adhérisation du caoutchouc sur la barre de torsion.

A cet effet l'invention concerne un palier élastique destiné à être fixé sur la caisse d'un véhicule par un étrier pour maintenir la barre de torsion d'un dispositif anti-dévers, ledit palier étant constitué d'un anneau en élastomère comportant, dans son épaisseur radiale, une armature métallique sensiblement coaxiale, caractérisé par le fait que l'élastomère est un caoutchouc ayant une dureté Shore inférieure à 55 afin de présenter un coefficient de frottement important entre la barre et le caoutchouc du palier et par le fait que l'armature métallique est apte à être déformée en dépassant la limite élastique du métal lors du montage du palier sur ladite barre de torsion et présente une résistance telle que ladite armature métallique garde la forme dans laquelle elle est amenée lors du montage du palier, malgré l'effort de réaction exercé par la couche de caoutchouc dudit anneau disposée à l'intérieur de l'armature métallique, de manière à maintenir ladite couche de caoutchouc précontrainte en compression radiale autour de la barre de torsion.

Avantageusement, l'épaisseur de l'armature métallique est telle que ladite couche de caoutchouc reste précontrainte en compression radiale autour de la barre de torsion par l'armature déformée en dépassant la limite élastique du métal.

De préférence, la précontrainte de la couche de caoutchouc disposée à l'intérieur de l'armature est une précompression suffisante pour réduire de 15 à 35 % l'épaisseur de ladite couche par rapport à l'état non comprimé.

Suivant l'invention, le caoutchouc a une dureté Shore comprise entre 40 et 55. Avantageusement, le rapport des épaisseurs moyennes de la couche de caoutchouc disposée à l'extérieur de l'armature Cₑ et de la couche de caoutchouc disposée à l'intérieur de l'armature Cᵢ est dans les limites : 0,8 ≤ Cₑ/Cᵢ ≤ 1,4.

Dans un mode de réalisation, l'armature est constituée par un cylindre droit d'épaisseur sensiblement constante, coupé selon une de ses génératrices pour former une ouverture axiale, ladite armature étant recouverte sur au moins la majeure partie de ses faces interne et externe d'une couche interne et d'une couche externe de caoutchouc.

Un tel palier est monté sur une barre de torsion, en refermant l'armature par rapprochement des bordures de son ouverture axiale de manière à l'amener dans une configuration cylindrique à base circulaire, cette déformation étant réalisée en dépassant la limite élastique du métal de sorte que ladite armature conserve la configuration dans laquelle elle est amenée.

Avantageusement, les couches interne et externe de caoutchouc de part et d'autre de l'armature ont une section axiale trapézoïdale avec une épaisseur constante dans leur zone centrale, tandis que ladite épaisseur décroît de part et d'autre de ladite zone centrale en direction des faces d'extrémité du palier.

Suivant une disposition avantageuse, la couche interne de caoutchouc disposée sur la face cylindrique interne de l'armature est munie de moyens pour assurer son collage sur la barre de torsion associée au palier.

L'invention sera mieux comprise grâce à la description qui va suivre donnée, à titre d'exemple non limitatif, en se référant au dessin annexé.

Sur ce dessin :
- la figure 1 est une vue en bout d'un palier selon un premier mode de réalisation ne faisant pas partie de l'invention, à l'état ouvert avant sa mise en place autour d'une barre de torsion ;
- la figure 2 est une vue en bout du palier de la figure 1 à l'état fermé autour d'une barre de torsion ;
- la figure 2A représente en perspective une variante de réalisation de l'armature d'un palier selon les figures 1 et 2 ;
- la figure 3 est une coupe axiale du palier de la figure 1 selon III-III de la figure 2, la barre de torsion n'étant pas représentée ;
- la figure 3A est une vue suivant IIIA-IIIA de la figure 3 ;
- la figure 4 est une vue en coupe axiale du palier de la figure 1 en cours d'utilisation ;
- la figure 5 est une vue semblable à la figure 1 pour un second mode de réalisation du palier suivant l'invention ;
- la figure 6 est une coupe axiale du palier de la figure 5 ;
- la figure 6A est une vue suivant VIA-VIA de la figure 6 ;
- la figure 7 est une vue en coupe selon VII-VII de la figure 8, du palier de la figure 5 monté sur la caisse d'un véhicule ;
- la figure 8 est une vue en coupe selon VIII-VIII de la figure 7.

Le caoutchouc utilisé, dans les deux modes de réalisation ci-après décrits, est un caoutchouc à faible dureté Shore, cette dureté sera inférieure à 55 et, par exemple, comprise entre 45 et 50. Les défauts évoqués plus haut pour les paliers de type classique utilisant de tels caoutchoucs sont combattus en prévoyant des moyens permettant d'appliquer à ce caoutchouc une forte précompression qui permet de réduire le glissement entre le palier et la barre pour faire travailler le caoutchouc en torsion.

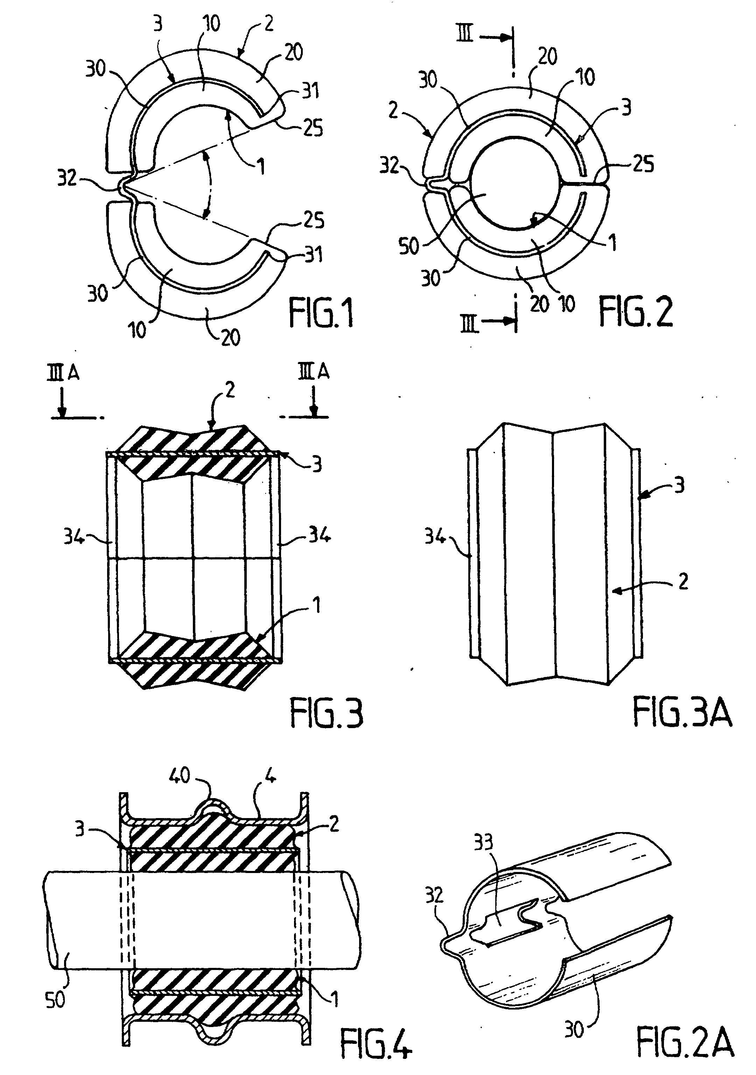

Comme visible sur les figures 1 à 4, pour le premier mode de réalisation, ne faisant pas partie de l'invention, le caoutchouc est réparti en deux couches, couche interne 1 et couche externe 2, disposées respectivement sur la surface interne et sur la surface externe d'une armature métallique 3 constituée d'une bande d'acier de largeur et épaisseur constantes. L'armature 3 est conformée selon deux portions cylindriques 30 raccordées par une charnière 32 en forme de V. L'armature 3 est obtenue par pliage d'une bande métallique d'épaisseur constante : la charnière 32 présente donc la même épaisseur que les portions cylindriques 30. La charnière 32 peut exister sur tout ou partie de la largeur de l'armature : dans cet exemple, la charnière est continue sur toute la largeur de l'armature. Dans la configuration initiale du palier, c'est-à-dire avant qu'il soit monté sur une barre de torsion, les deux portions cylindriques sont écartées l'une de l'autre, le palier présentant un angle d'ouverture d'environ 50°. Les deux portions cylindriques 30 s'étendent chacune sensiblement sur une demi-circonférence, un faible jeu étant laissé entre leurs bordures libres 31 parallèles à l'arête de la charnière 32, lorsque lesdites portions sont disposées en vis-à-vis de manière à épouser la forme d'un cylindre.

Le caoutchouc est disposé de part et d'autre de l'armature en ne recouvrant que les portions cylindriques de celle-ci à l'exception de la charnière 32, il forme donc une couche interne 1 en deux parties 10 et une couche externe 2 en deux parties 20. Une couche de caoutchouc de faible épaisseur relie les parties 10 et 20 au droit des bordures libres 31 pour constituer l'extrémité libre 25 de chacun des demi-paliers reliés par la charnière 32.

Lors du montage du palier sur une barre de torsion, les deux portions cylindriques 30 de l'armature 3 sont ramenées l'une vers l'autre à la main, de manière à épouser la forme d'un cylindre ; la charnière 32 se ferme donc pour permettre le rapprochement des bordures libres des portions cylindriques 30, qu'elle raccorde, et passe d'un profil en V ouvert à un profil où les deux branches sont en appui l'une contre l'autre. Pour que l'effort de fermeture soit faible, on peut réduire la longueur de la partie déformable de l'armature, comme représenté sur la figure 2A, en ménageant un évidement longitudinal 33 dans la zone centrale de la charnière 32.

La figure 2 montre le palier de la figure 1 dans sa conformation de montage autour d'une barre de torsion 50. La précontrainte appliquée à la couche 1 de caoutchouc disposée à l'intérieur de l'armature 3 est une précompression suffisante pour réduire de 20 à 30 % l'épaisseur de ladite couche par rapport à son état non comprimé. Dans le mode de réalisation représenté au dessin, l'épaisseur du caoutchouc des parties 10 de la couche interne 1 est réduite d'environ 1/4 au moment où l'on réalise l'écrasement de la charnière 32, les extrémités libres 25 venant en contact l'une de l'autre sensiblement sans compression.

Cet écrasement du caoutchouc sous l'effet de l'effort de compression auquel il est soumis à la mise en place du palier autour de sa barre de torsion, associé aux bonnes caractéristiques de frottement d'un caoutchouc de faible dureté Shore, permet d'améliorer de manière intéressante la performance du palier en réduisant considérablement le glissement relatif entre ledit caoutchouc et la barre de torsion, et en réduisant l'hystérésis au cours du fonctionnement. Etant donné que le glissement est réduit, la tenue du caoutchouc à l'usure reste satisfaisante bien qu'il s'agisse de caoutchouc de faible dureté Shore.

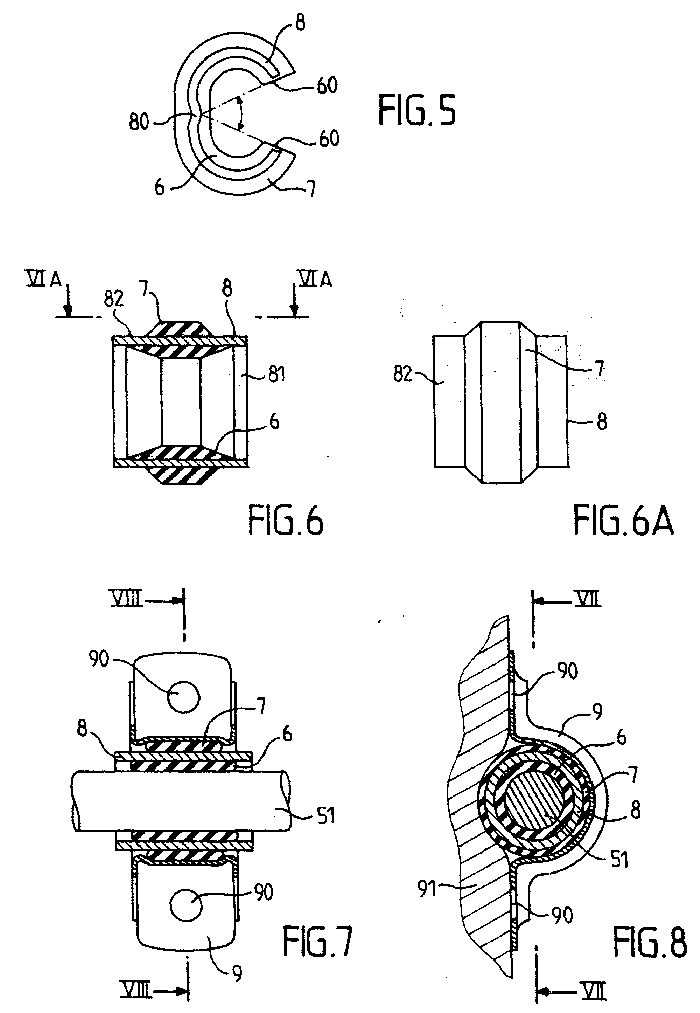

De manière à conserver la compression appliquée sur le palier au cours de son montage sur la barre de torsion, le palier est positionné dans un étrier 4, visible sur la figure 4. Dans l'exemple de réalisation représenté, cet étrier présente un bossage périphérique 40 permettant de le rigidifier malgré sa faible épaisseur ; l'étrier 4 est fixé sur la caisse du véhicule équipé de la barre de torsion anti-dévers 50.

Si l'on se reporte aux figures 3 et 3A, on voit que les couches 1 et 2 de caoutchouc ont une épaisseur variant d'un point à l'autre sur la largeur de l'armature ; elle est peu importante sur les bords et au centre et plus importante dans les zones intermédiaires situées entre le centre et chacun des bords. Une telle disposition permet d'uniformiser la pression de contact sur toute la largeur du palier.

Dans l'exemple de réalisation représenté sur le dessin, le caoutchouc ne recouvre pas les bordures 34 et les tranches transversales de l'armature mais les bordures axiales 31 sont recouvertes ; ces bordures 34 ne comportent qu'une fine pellicule de caoutchouc et permettent le centrage de l'armature 3 dans le moule qui assure la mise en place du caoutchouc. Cependant les bordures et les tranches transversales de l'armature pourraient, en variante, être recouvertes par une couche de caoutchouc. On entend par bordures et tranches transversales celles qui se trouvent dans un plan perpendiculaire à l'axe de l'armature.

Afin d'améliorer encore les caractéristiques du palier qui vient d'être décrit en augmentant le coefficient de frottement entre le caoutchouc et la barre de torsion, on peut prévoir de coller la couche interne de caoutchouc sur la barre de torsion à l'aide d'une bande adhésive, dont les deux faces sont collantes, ou à l'aide d'une colle à froid. Une telle opération sera rapide à réaliser et peu coûteuse en comparaison des opérations nécessaires en vue d'une adhérisation telle que proposée dans l'état de la technique.

Dans le mode de réalisation de l'invention, qui n'est représentée qu'aux figures 5 à 8, l'armature 8 est constituée par un cylindre d'épaisseur constante coupé axialement. Cette armature 8 est recouverte sur la majeure partie de ses faces interne et externe d'une couche interne 6 et d'une couche externe 7 de caoutchouc qui, dans l'exemple représenté au dessin, se rejoignent le long de l'ouverture axiale de ladite armature en une couche de faible épaisseur qui constitue chacune des bordures axiales libres 60 du palier. Les bordures interne et externe 81, 82 de l'armature, situées dans des plans perpendiculaires à l'axe, ne sont pas recouvertes de caoutchouc pour permettre le centrage de l'armature dans le moule. La bordure externe 82 est plus grande que la bordure interne 81.

Dans la configuration initiale du palier, c'est-à-dire avant qu'il soit monté sur une barre de torsion (voir figure 5), les deux bordures 60 de l'ouverture axiale sont écartés l'une de l'autre, le palier présentant un angle d'ouverture d'environ 50°. Dans cette disposition ouverte, la portion 80 de l'armature 8 diamétralement opposée à l'ouverture axiale forme une creusure concave dans la surface externe de l'armature.

Lors du montage du palier sur une barre de torsion 51, l'armature 8 est refermée par rapprochement des bordures de l'ouverture axiale, de manière à la ramener dans une configuration cylindrique ; cette déformation peut être obtenue en appliquant un effort sur la bordure 82, ce qui permet d'agir de façon plus précise qu'en exerçant l'effort sur le caoutchouc. Cette déformation est réalisée en dépassant la limite élastique du métal de sorte que ladite armature conserve la forme cylindrique à laquelle elle est amenée : dans cette réalisation, l'armature 8 est plus épaisse que dans le cas de la réalisation des figures 1 à 4. En effet, l'armature 8 doit être assez résistante pour garder la forme dans laquelle elle est amenée lors du montage du palier malgré l'effort de réaction exercé par le caoutchouc de la couche interne 6, de manière à maintenir la compression du caoutchouc.

Comme visible sur les figures 7 et 8, le palier est monté sur la caisse 91 du véhicule au moyen d'un étrier 9 fixé à ladite caisse par des moyens de fixation insérés dans les ouvertures 90.

Comme visible à la figure 6, les couches interne 6 et externe 7 de caoutchouc ont, dans cette forme de réalisation, une section trapézoïdale avec une épaisseur constante dans leur zone centrale tandis qu'elle décroît de part et d'autre de ladite zone centrale en direction des bords latéraux de l'armature 8.

La couche interne 6 de caoutchouc peut, comme précédemment décrit pour le premier mode de réalisation, être collée par des moyens simples et peu coûteux sur la barre de torsion 51.

## Revendications

1. Palier élastique destiné à être fixé sur la caisse d'un véhicule par un étrier (4, 9) pour maintenir la barre de torsion d'un dispositif anti-dévers, ledit palier étant constitué d'un anneau en élastomère comportant, dans son épaisseur radiale, une armature métallique (3, 8) sensiblement coaxiale, **caractérisé par le fait que** l'élastomère est un caoutchouc ayant une dureté Shore inférieure à 55 afin de présenter un coefficient de frottement important entre la barre et le caoutchouc du palier et **par le fait que** l'armature métallique (3, 8) est apte à être déformée en dépassant la limite élastique du métal lors du montage du palier sur ladite barre de torsion et présente une résistance telle que ladite armature métallique garde la forme dans laquelle elle est amenée lors du montage du palier, malgré l'effort de réaction exercé par la couche de caoutchouc (1, 6) dudit anneau disposée à l'intérieur de l'armature métallique (3, 8), de manière à maintenir ladite couche de caoutchouc précontrainte en compression radiale autour de la barre de torsion.

2. Palier selon la revendication 1, **caractérisé par le fait que** l'épaisseur de l'armature métallique est telle que ladite couche de caoutchouc reste précontrainte en compression radiale autour de la barre de torsion par l'armature déformée en dépassant la limite élastique du métal.

3. Palier selon la revendication 1 ou 2, **caractérisé par le fait que** la précontrainte de la couche de caoutchouc (1, 6) disposée à l'intérieur de l'armature (3, 8) est une précompression suffisante pour réduire de 15 à 35 % l'épaisseur de ladite couche par rapport à l'état non comprimé.

4. Palier selon l'une des revendications 1 à 3, **caractérisé par le fait que** le caoutchouc a une dureté Shore comprise entre 40 et 55.

5. Palier selon l'une des revendications 1 à 4, **caractérisé par le fait que** le rapport de l'épaisseur moyenne (Cₑ) de la couche de caoutchouc à l'extérieur de l'armature à l'épaisseur moyenne (Cᵢ) de la couche de caoutchouc à l'intérieur de l'armature est compris entre 0,8 et 1,4.

6. Palier selon l'une des revendications 1 à 5, **caractérisé par le fait que** l'armature (8) est constituée par un cylindre droit d'épaisseur sensiblement constante, coupé selon une de ses génératrices pour former une ouverture axiale, ladite armature étant recouverte sur au moins la majeure partie de ses faces interne et externe d'une couche interne (6) et d'une couche externe (7) de caoutchouc .

7. Palier selon la revendication 6, **caractérisé par le fait qu'**il est monté sur une barre de torsion (5), en refermant l'armature (8) par rapprochement des bordures de son ouverture axiale de manière à l'amener dans une configuration cylindrique à base circulaire, cette déformation étant réalisée en dépassant la limite élastique du métal de sorte que ladite armature conserve la configuration dans laquelle elle est amenée.

8. Palier selon la revendication 6 ou 7, **caractérisé par le fait que** les couches interne (6) et externe (7) de caoutchouc de part et d'autre de l'armature (8) ont une section axiale trapézoïdale avec une épaisseur constante dans leur zone centrale, tandis que ladite épaisseur décroît de part et d'autre de ladite zone centrale en direction des faces d'extrémité du palier.

9. Palier selon l'une des revendications 1 à 8, **caractérisé par le fait que** la couche interne (1, 6) de caoutchouc disposée sur la face cylindrique interne de l'armature est munie de moyens pour assurer son collage sur la barre de torsion associée au palier.

## Patentansprüche

1. Elastisches Lager, das an einem Wagenkasten durch einen Bügel (4, 9) befestigt wird, um den Drehstab einer Stabilisatorvorrichtung zu halten, wobei das Lager aus einem Ring aus Elastomermaterial besteht, der in seiner radialen Dicke eine im wesentlichen koaxiale Metallbewehrung (3, 8) aufweist, **dadurch gekennzeichnet, daß** das Elastomermaterial ein Kautschuk mit einer Shore-Härte von weniger als 55 ist, um einen hohen Reibungskoeffizienten zwischen dem Stab und dem Kautschuk des Lagers aufzuweisen, und dadurch, daß die metallische Bewehrung (3, 8) mit Überschreitung der Elastizitätsgrenze des Metalls bei der Montage des Lagers auf den Drehstab verformt werden kann und eine solche Festigkeit aufweist, daß sie die Form, in die sie bei der Montage des Lagers gebracht wird, trotz der Reaktionsbeanspruchung beibehält, die von der Kautschukschicht (1, 6) des Rings ausgeübt wird, die innerhalb der metallischen Bewehrung (3, 8) angeordnet ist, so daß die Kautschukschicht in radialer Komprimierung um den Drehstab vorgespannt gehalten wird.

2. Lager nach Anspruch 1, **dadurch gekennzeichnet, daß** die Dicke der metallischen Bewehrung so ist, daß die Kautschukschicht durch die mit Überschreitung der Elastizitätsgrenze des Metalls verformte Bewehrung in radialer Komprimierung um den Drehstab vorgespannt bleibt.

3. Lager nach Anspruch 1 oder 2, **dadurch gekennzeichnet, daß** die Vorspannung der Kautschukschicht (1, 6), die innerhalb der Bewehrung (3, 8) angeordnet ist, eine Vorkomprimierung ist, die ausreicht, um die Dicke der Schicht in bezug auf den nicht komprimierten Zustand um 15 bis 35% zu verringern.

4. Lager nach einem der Ansprüche 1 bis 3, **dadurch gekennzeichnet, daß** der Kautschuk eine Shore-Härte zwischen 40 und 55 aufweist.

5. Lager nach einem der Ansprüche 1 bis 4, **dadurch gekennzeichnet, daß** das Verhältnis zwischen der mittleren Dicke (Cₑ) der Kautschukschicht außerhalb der Bewehrung und der mittleren Dicke (Cᵢ) der Kautschukschicht innerhalb der Bewehrung zwischen 0,8 und 1,4 liegt.

6. Lager nach einem der Ansprüche 1 bis 5, **dadurch gekennzeichnet, daß** die Bewehrung (8) aus einem geraden Zylinder mit im wesentlichen konstanter Dicke besteht, der entlang einer seiner Mantellinien durchgeschnitten ist, um eine axiale Öffnung zu bilden, wobei die Bewehrung über zumindest den größten Teil ihrer Innen- und Außenflächen von einer inneren (6) und einer äußeren Kautschukschicht (7) bedeckt wird.

7. Lager nach Anspruch 6, **dadurch gekennzeichnet, daß** es auf einen Drehstab (5) montiert wird, indem die Bewehrung (8) durch Annäherung der Ränder ihrer axialen Öffnung so verschlossen wird, daß sie in eine zylindrische Ausbildung mit kreisförmiger Basis gebracht wird, wobei diese Verformung mit Überschreitung der Elastizitätsgrenze des Metalls hergestellt wird, so daß die Bewehrung die Ausbildung beibehält, in die sie gebracht wird.

8. Lager nach Anspruch 6 oder 7, **dadurch gekennzeichnet, daß** die innere (6) und die äußere Kautschukschicht (7) zu beiden Seiten der Bewehrung (8) einen trapezförmigen axialen Querschnitt mit einer konstanten Dicke in ihrem zentralen Bereich aufweisen, während die Dicke zu beiden Seiten der zentralen Zone in Richtung der Endflächen des Lagers abnimmt.

9. Lager nach einem der Ansprüche 1 bis 8, **dadurch gekennzeichnet, daß** die innere Kautschukschicht (1, 6), die auf der zylindrischen Innenfläche der Bewehrung angeordnet ist, mit Mitteln versehen ist, um ihr Kleben auf dem dem Lager zugeordneten Drehstab zu gewährleisten.

## Claims

1. An elastic bearing intended to be fixed to the body of a vehicle by a bracket (4, 9) in order to keep in place the torsion bar of an anti-roll device, the said bearing being formed by a ring of elastomer having in its radial thickness a substantially coaxial metal armature (3, 8), **characterised in that** the elastomer is a rubber with a Shore hardness less than 55 in order to give a large coefficient of friction between the bar and the rubber of the bearing, and **in that** the metal armature (3, 8) is capable of being deformed to exceed the limit of elasticity of the metal when the bearing is mounted on the said torsion bar and has a resistance such that the said metal armature keeps the shape into which it is brought when the bearing is mounted, despite the force of reaction exerted by the layer of rubber (1, 6) of the said ring which is disposed inside the metal armature (3, 8), such that the said layer of rubber is kept pre-stressed in radial compression around the torsion bar.

2. A bearing according to Claim 1, **characterised in that** the thickness of the metal armature is such that the said layer of rubber remains pre-stressed in radial compression around the torsion bar by the armature deformed to exceed the limit of elasticity of the metal.

3. A bearing according to Claim 1 or 2, **characterised in that** the pre-stressing of the layer of rubber (1, 6) disposed inside the armature (3, 8) is a sufficient pre-stressing for the thickness of the said layer to be reduced by 15 to 35% with respect to the non-compressed state.

4. A bearing according to one of Claims 1 to 3, **characterised in that** the rubber has a Shore hardness of between 40 and 55.

5. A bearing according to one of Claims 1 to 4, **characterised in that** the ratio of the average thickness (Cₑ) of the layer of rubber outside the armature and the average thickness (Cⱼ) of the layer of rubber inside the armature is between 0.8 and 1.4.

6. A bearing according to one of Claims 1 to 5, **characterised in that** the armature (8) is formed by a straight cylinder of substantially constant thickness which is cut along one of its generatrices to form an axial opening, the said armature being covered over at least most of its inner and outer faces with an inner layer (6) and an outer layer (7) of rubber.

7. A bearing according to Claim 6, **characterised in that** it is mounted on a torsion bar (5), closing the armature (8) by bringing the edges of its axial opening together so that it is brought into a cylindrical configuration with a circular base, this deformation being carried out such that it exceeds the limit of elasticity of the metal so that the said armature maintains the configuration into which it is brought.

8. A bearing according to Claim 6 or 7, **characterised in that** the inner layer (6) and outer layer (7) of rubber on either side of the armature (8) have a trapezoidal axial section with a constant thickness in their central zone, while the said thickness decreases on either side of the said central zone in the direction of the end faces of the bearing.

9. A bearing according to one of Claims 1 to 8, **characterised in that** the inner layer (1, 6) of rubber disposed on the inner cylindrical face of the armature is equipped with means to ensure its adhesion to the torsion bar associated with the bearing.
